# EUROPEAN PATENT APPLICATION

(11) **EP 4 443 108 A1**
(43) Date of publication of application: **09.10.2024**
(21) Application number: 22897598.3
(22) Date of filing: 08.11.2022
(51) Int. Cl.: G01C 21/16, G06T 7/73, G06T 7/33

(54) **POSITIONING SYSTEM AND POSITIONING METHOD BASED ON SECTOR DEPTH CAMERA**

(30) Priority: 29.11.2021 CN 202111430821
(71) Applicant: Amicro Semiconductor Co., Ltd., Hengqin New District, Zhuhai City Guangdong 519000 (CN)
(72) Inventor: LAI, Qinwei, Zhuhai, Guangdong 519000 (CN); WANG, Yuelin, Zhuhai, Guangdong 519000 (CN); HUANG, Liying, Zhuhai, Guangdong 519000 (CN); YAN, Yongxian, Zhuhai, Guangdong 519000 (CN)
(74) Representative: Murgitroyd & Company
(86) International application number: PCT/CN2022/130464
(87) International publication number: WO 2023/093515

(57) **Abstract**

A positioning system based on a sector depth camera is disclosed. The positioning system comprises: a sector depth camera used for acquiring 3D point cloud data within a sector range of a preset angle in a horizontal direction and transmitting the 3D point cloud data to a positioning optimization module; an image acquisition device used for acquiring image data and transmitting the image data to the positioning optimization module; an inertial sensor used for acquiring IMU data and transmitting the IMU data to the positioning optimization module; and the positioning optimization module used for receiving the 3D point cloud data transmitted by the sector depth camera, the image data transmitted by the image acquisition device, and the IMU data transmitted by the inertial sensor, and optimizing the 3D point cloud data based upon the image data and the IMU data to obtain an optimized location information. The positioning system uses the sector depth camera to achieve a laser navigation positioning, and the sector depth camera data are compensated and optimized in combination with the visual image data and the IMU data, so that the positioning precision and reliability of the positioning system based on the sector depth camera are improved.

## Description

### TECHNICAL FIELD

The invention relates to a technical field of a visual positioning, in particular to a positioning system and a positioning method based on a sector depth camera.

### BACKGROUND OF TECHNOLOGY

At present, mobile robots in the existing technology usually have the function of autonomous mobile positioning and navigation. Most mobile robots use technologies such as vision, laser or inertial navigation to achieve an autonomous positioning and navigation. Among the current positioning and navigation technologies that support mobile robots, a 360-degree rotating laser navigation technology has been affirmed by many consumers due to having a high positioning accuracy and a good map construction effect. But, the 360-degree rotating laser navigation technology needs to install a rotating laser mechanism protruding on the mobile robot, which increases the cost of robot molding, and leads a problem of short life due to a rotating mechanical structure existing in the rotating laser mechanism.

### SUMMARY OF INVENTION

### TECHNICAL PROGLEMS

### SOLUTION TO PROBLEMS

### TECHNICAL SOLUTION

In order to solve the above problems, the present invention provides a positioning system and a positioning method based on a sector depth camera, which uses a sector depth camera without a rotating mechanical structure to realize a laser navigation and positioning, and combines visual image data and IMU data to compensate and optimize data of the sector depth camera to improve a positioning accuracy and reliability while solving shortcomings of the rotating laser navigation technology. The specific technical solution of the present invention is as follows. A positioning system based on a sector depth camera specifically includes: a sector depth camera which is used to collect 3D point cloud data within a sector range of a preset angle in a horizontal direction and transmit the 3D point cloud data to a positioning optimization module; an image acquisition device which is used to acquire image data and transmit the image data to the positioning optimization module; an inertial sensor which is used to acquire IMU data and transmit the IMU data to the positioning optimization module; and the positioning optimization module which is used to receive the 3D point cloud data transmitted by the sector depth camera, the image data transmitted by the image acquisition device and the IMU data transmitted by the inertial sensor, and to optimize the 3D point cloud data based on the image data and the IMU data to obtain an optimized location information.

Furthermore, the positioning optimization module specifically includes: an image front-end processing unit, configured to receive the image data transmitted by the image acquisition device, and perform a visual processing on the image data to obtain a first to-be-optimized pose and transmit it to a back-end optimization unit; a point cloud front-end processing unit, configured to receive the 3D point cloud data transmitted by the sector depth camera and the IMU data transmitted by the inertial sensor, and perform a point cloud processing on the 3D point cloud data and the IMU data to obtain a second to-be-optimized pose and transmit it to the back-end optimization unit; and the back-end optimization unit used to receive the first to-be-optimized pose transmitted by the image front-end processing unit, the second to-be-optimized pose transmitted by the point cloud front-end processing unit, and the IMU data transmitted by the inertial sensors, and to use the IMU data and the first to-be-optimized pose to perform a back-end optimization processing on the second to-be-optimized pose to obtain the optimized location information.

Furthermore, the image front-end processing unit also transmits the first to-be-optimized pose to the point cloud front-end processing unit for serving a compensation data to optimize the second to-be-optimized pose which obtained by the point cloud front-end processing unit based on the 3D point cloud data and the IMU data.

The present invention also discloses a positioning method based on a sector depth camera. The positioning method based on a sector depth camera is realized based on the aforementioned positioning system based on a sector depth camera. The positioning method based on a sector depth camera includes: an image processing step in which the image acquisition device acquires a current frame image and transmits the current frame image to the image front-end processing unit, the image front-end processing unit performs an image processing on the current frame image and obtains a relative pose of the current frame image as the first to-be-optimized pose, and the image front-end processing unit transmits the first to-be-optimized pose to the back-end optimization unit; a point cloud processing step in which the sector depth camera obtains a current frame 3D point cloud and transmits the current frame 3D point cloud to the point cloud front-end processing unit, and the point cloud front-end processing unit performs an optimal matching screening on the current frame 3D point cloud to obtain an optimal matching pose of the current frame 3D point cloud as the second to-be-optimized pose, and the point cloud front-end processing unit transmits the second to-be-optimized pose to the back-end optimization unit; a positioning optimization processing step in which the back-end optimization unit performs a positioning optimization processing on the second to-be-optimized pose transmitted by the point cloud front-end processing unit based on the IMU data transmitted by the inertial sensor and the first to-be-optimized pose transmitted by the image front-end processing unit, and obtains the optimized location information.

Furthermore, the image processing step specifically includes: configuring the image acquisition device to acquire the current frame image and transmits it to the image front-end processing unit; configuring the image front-end processing unit to determine a reference frame image from a previously recorded image; configuring the image front-end processing unit to perform a feature extraction on the reference frame image and the current frame image, and to obtain features of the reference frame image and features of the current frame image; configuring the image front-end processing unit to perform a feature matching on the features of the reference frame image and the features of the current frame image, and to obtain a re-projection error between the features of the reference frame image and the features of the current frame image; configuring the image front-end processing unit to conduct a minimization process to the re-projection error between the features of the reference frame image and the features of the current frame image so as to obtain a relative pose between the reference frame image and the current frame image for serving as a first relative pose of the current frame image; configuring the image front-end processing unit to transmit the first relative pose of the current frame image as the first to-be-optimized pose to the back-end optimization unit.

Furthermore, the method for the image front-end processing unit to determine the reference frame image from the previously recorded image specifically includes: configuring the image front-end processing unit to determine a previous frame image of the current frame image from the previously recorded image as the reference frame image , and/or configuring the image front-end processing unit to determine one key frame image from previously recorded images as the reference frame image.

Furthermore, the image processing step also includes: configuring the image front-end processing unit to judge whether it is possible to select at least one key frame image that matches the features of the current frame image from all previously recorded key frame images; and if it is possible to select the at least one key frame image that matches the feature of the current frame image from all the previously recorded key frame images, then to obtain the relative pose between the one key frame image matching the feature of the current frame image and the current frame image as a second relative pose of the current frame image, and configuring the image front-end processing unit to transmit the second relative pose of the current frame image as the first to-be-optimized pose to the back-end optimization unit; if it is not possible to select the at least one key frame image matching the features of the current frame image from all the previously recorded key frame images, then configuring the image front-end processing unit to transmit the first relative pose of the current frame image as the first to-be-optimized pose to the back-end optimization unit.

Furthermore, the point cloud processing step specifically includes: configuring the sector depth camera to acquire the current frame 3D point cloud and to transmit it to the point cloud front-end processing unit; configuring the point cloud front-end processing unit to match the current frame 3D point cloud with a current sub-image so as to obtain the optimal matching pose between the current frame 3D point cloud and the current sub-image; and configuring the point cloud front-end processing unit to use the optimal matching pose between the current frame 3D point cloud and the current sub-image as the second to-be-optimized pose.

Furthermore, The method for the point cloud front-end processing unit to match the current frame 3D point cloud with the current sub-image so as to obtain the optimal matching pose between the current frame 3D point cloud and the current sub-image, specifically comprising: configuring the point cloud front-end processing unit to perform a 3D point cloud superimposition matching based on the previously obtained 3D point cloud to generate the current sub-image; configuring the point cloud front-end processing unit to use an iterative closest point algorithm to match the current frame 3D point cloud with all the 3D point clouds of the current sub-image respectively so as to obtain a matching error between the current frame 3D point cloud and the current sub-image; configuring the point cloud front-end processing unit to minimize the matching error between the current frame 3D point cloud and the current sub-image, and to obtain the optimal matching pose between the current frame 3D point cloud and the current sub-image.

Furthermore, the point cloud processing step also includes: configuring the point cloud front-end processing unit to judge whether the minimized matching error between the current frame 3D point cloud and the current sub-image is greater than or equal to a preset error threshold; and if the minimized matching error between the current frame 3D point cloud and the current sub-image is greater than or equal to the preset error threshold, then using the current sub-image as a historical sub-image, and rebuilding the current sub-image ; if the minimized matching error between the current frame 3D point cloud and the current sub-image is less than the preset error threshold, then configuring the current frame 3D point cloud to be superimposed and matched to the current sub-image to update the current sub-image.

Furthermore, the point cloud processing step also includes: configuring the point cloud front-end processing unit to select the first to-be-optimized pose in the nearest adjacent frame as an initial pose of the current frame 3D point cloud to compensate and optimize the current frame 3D point cloud; wherein, the first to-be-optimized pose in the nearest adjacent frame refers to a frame of the first to-be-optimized pose with a least number of frames away from the frame where the current frame 3D point cloud located.

Furthermore, the point cloud processing step also includes: configuring the point cloud front-end processing unit to acquire the IMU data transmitted by the inertial sensor; configuring the point cloud front-end processing unit to judge whether the initial pose of the current frame 3D point cloud is the same frame as the current frame 3D point cloud ; and if the initial pose of the current frame 3D point cloud is the same frame as the current frame 3D point cloud, then using the initial pose of the current frame 3D point cloud to for a registration to the current frame 3D point cloud; if the initial pose of the current frame 3D point cloud and the current frame 3D point cloud are not in the same frame, then configuring the point cloud front-end processing unit to perform an equal-scale alignment processing on the initial pose of the current frame 3D point cloud and the current frame 3D point cloud based on the IMU data, and using the initial pose of the current frame 3D point cloud having done the equal-scale alignment process for a registration to the current frame 3D point cloud having done the equal-scale alignment process.

Furthermore, the method for the point cloud front-end processing unit to perform an equal-scale alignment processing on the initial pose of the current frame 3D point cloud and the current frame 3D point cloud based on the IMU data specifically includes: configuring the point cloud front-end processing unit to acquire two frames of IMU data closest to the initial pose of the current frame 3D point cloud, and using the former frame IMU data in the two frames of IMU data closest to the initial pose of the current frame 3D point cloud as a first alignment reference data, and using a latter frame IMU data in the two frames of IMU data of the initial pose of the current frame 3D point cloud as a second alignment reference data; configuring the point cloud front-end processing unit to calculate a first moment difference between an acquisition moment of the initial pose of the current frame 3D point cloud and an acquisition moment of the first alignment reference data; configuring the point cloud front-end processing unit to calculate a second moment difference between the acquisition moment of the initial pose of the current frame 3D point cloud and an acquisition moment of the second alignment reference data; configuring the point cloud front-end processing unit to determine a pose between the initial pose of the current frame 3D point cloud and the first alignment reference data according to a pose between the first alignment reference data and the second alignment reference data, the first moment difference, and the second moment difference; configuring the point cloud front-end processing unit to acquire two frames of IMU data closest to the current frame 3D point cloud, and using a former frame IMU data in the two frames of IMU data closest to the current frame 3D point cloud as a third alignment reference Data, and using a latter frame IMU data in the two frames of IMU data closest to the current frame 3D point cloud as a fourth alignment reference data; configuring the point cloud front-end processing unit to calculate a third moment difference between the acquisition moment of the current frame 3D point cloud and an acquisition moment of the third alignment reference data; configuring the point cloud front-end processing unit to calculate a fourth moment difference between the acquisition moment of the current frame 3D point cloud and an acquisition moment of the fourth alignment reference data; configuring the point cloud front-end processing unit to determine a pose between the current frame 3D point cloud and the third alignment reference data according to the pose between the third alignment reference data and the fourth alignment reference data, the third moment difference, and the fourth moment difference; configuring the point cloud front-end processing unit to calculate a fifth moment difference between the acquisition moment of the first alignment reference data and the acquisition moment of the third alignment reference data; and configuring the point cloud front-end processing unit to determine a pose between the initial pose of the current frame 3D point cloud and the current frame 3D point cloud according to a pose between the first alignment reference data and the third alignment reference data, the fifth moment difference, the pose between the initial pose of the current frame 3D point cloud and the first alignment reference data, and the pose between the current frame 3D point cloud and the third alignment reference data.

Furthermore, the positioning optimization processing step specifically includes: configuring the back-end optimization unit to receive the first to-be-optimized pose transmitted by the image front-end processing unit and the second to-be-optimized pose transmitted by the point cloud front-end processing unit; configuring the back-end optimization unit to perform an error minimization calculation on the first to-be-optimized pose and the second to-be-optimized pose to obtain a best node graph; configuring the back-end optimization unit to receive the IMU data transmitted by the inertial sensor, and to perform a filter fusion optimization based on the IMU data combined with the best node graph to obtain the optimized location information.

The positioning system based on a sector depth camera provided by the present invention uses the sector depth camera to realize a laser positioning and navigation. Compared with the 360-degree rotating laser commonly used in the prior art, the sector depth camera adopted in the present invention does not need to be equipped with a rotating mechanical structure, and can extend the life time of the laser device. Moreover, the image data collected by the visual positioning technology and the IMU data collected by the inertial sensor are used to compensate and optimize the data collected by the sector depth camera, so that the problem of shortcomings that the sector depth camera cannot obtain enough matching information due to the limitation of the collection angle is solved, thereby realizing a combination of the visual positioning technology and the advantages of the sector depth camera, and improving the overall positioning accuracy and reliability of the positioning system..

### BENFIC EFFECT OF INVENTION

### BRIEF DESCRIPTION OF DRAWINGS

### DESCRIPTION OF DRAWINGS

FIG. 1 is a schematic block diagram of a positioning system based on a sector depth camera according to a first embodiment of the present invention.
FIG. 2 is a schematic block diagram of a positioning system based on a sector depth camera according to a second embodiment of the present invention.
FIG. 3 is a schematic block diagram of a positioning system based on a sector depth camera according to a third embodiment of the present invention.
FIG. 4 is a schematic diagram of steps of a positioning method based on a sector depth camera according to a fourth embodiment of the present invention.
Fig. 5 is a schematic diagram of steps of an image processing according to an embodiment of the present invention.
Fig. 6 is a schematic diagram of steps of a point cloud processing according to an embodiment of the present invention.

### EMBODIMENTS OF INVENTION

### EMBODIMENTS OF THE INVENTION

In order to make the object, technical solution and advantages of the present invention clearer, the present invention will be described and illustrated below in conjunction with the accompanying drawings and embodiments. It should be understood that the specific embodiments described below are only used to explain the present invention, not to limit the present invention. In addition, it can also be understood that for those skilled in the art, making some changes of design, manufacturing or production in the technical content disclosed in the present invention is just a conventional technical means, and should not be understood as insufficient to the content disclosed in the present application.

Unless otherwise defined, the technical terms or scientific terms involved in the present invention shall have the usual meanings understood by those of ordinary skill in the technical field to which the present application belongs. The terms "comprising", "comprising", "having" and any variations thereof involved in this application are intended to cover non-exclusive inclusion, such as: a process, method, system product or device comprising a series of steps or modules, without limitation Instead of listed steps or modules, non-listed steps or modules may be included, or other steps or modules inherent to these processes, methods, products or devices may be included.

As a preferred embodiment of the present invention, a first embodiment of the present invention provides a positioning system based on a sector depth camera, which uses a sector depth camera to solve the problems of high cost and short life of the rotating laser structure required by the current 360 rotating laser technology. Moreover, by means of incorporating visual image data and IMU data to compensate and optimize the 3D point cloud data collected by the sector depth camera so as to solve the shortcomings of the sector depth camera that has little 3D point cloud data in comparing with the 360-degree rotating laser, an overall positioning accuracy and reliability of the positioning system is raised.

It should be noted that the positioning system based on the sector depth camera provided by the present invention is applicable to various intelligent robots with mobile functions, such as sweeping robots, mopping robots, and patrol robots.

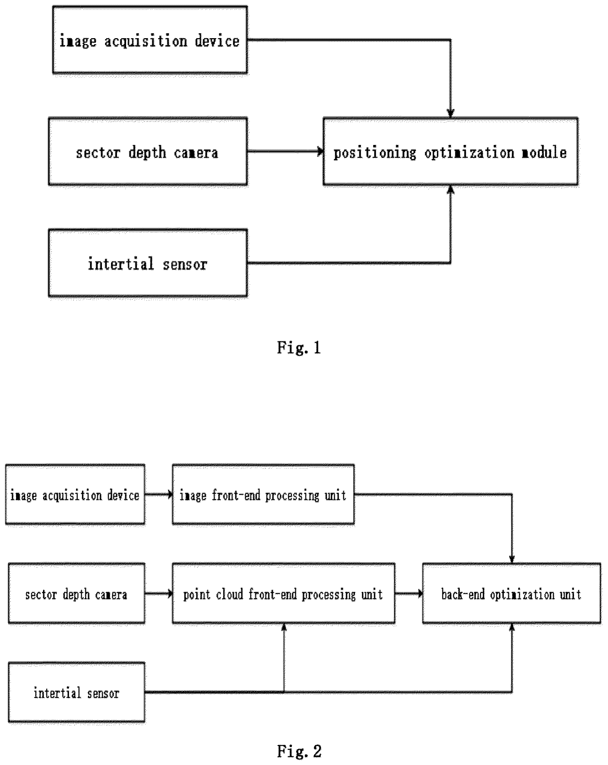

Specifically, as shown in Figure 1, the positioning system based on the sector depth camera includes: a sector depth camera, which is used to collect 3D point cloud data within a sector range of a preset angle in a horizontal direction and transmit the 3D point cloud data to a positioning optimization module. Specifically, the range in which 3D point cloud data can be collected in the horizontal direction is limited to the sector range of a preset angle, and the preset angle of the sector depth camera can be, but not limited to, an angle of 30°, 60°, 90° or 120°, etc., any angle being smaller than 180°.

An image acquisition device is used to collect image data and transmit the image data to a positioning optimization module. Specifically, the image acquisition device refers to a device with image acquisition function. In the present invention, the image acquisition device can be, but not limited to, a device with image acquisition functions such as a monocular camera, a binocular cameras, or a fisheye camera.

An inertial sensor is used for collecting IMU data and transmitting the IMU data to the positioning optimization module. Specifically, the inertial sensor is a sensor used to detect and measure acceleration and inclination. In the present invention, the inertial sensor comprises an acceleration sensor and an angle sensor. Described the IMU data collected by the inertial sensor specifically includes acceleration and angular velocity.

The positioning optimization module is used to receive the 3D point cloud data transmitted by the sector depth camera, the image data transmitted by the image acquisition device, and the IMU data transmitted by the inertial sensor, and to optimize the 3D point cloud data based on the image data and IMU data so as to obtain an optimized location information.

Based on the above embodiments, as a preferred embodiment of the present invention shown in Figure 2, the positioning optimization module according to a second embodiment of the present invention includes: an image front-end processing unit, a point cloud front-end processing unit, and a back-end optimization unit.

Specifically, the image front-end processing unit is configured to receive the image data transmitted by the image acquisition device, and to perform a visual processing on the image data so as to obtain a first to-be-optimized pose and to transmit the first to-be-optimized pose to the back-end optimization unit. Specifically, the image front-end processing unit is configured to acquire, based on the image data, the first to-be-optimized pose that is used for implementing a compensation to the sector depth camera.

The point cloud front-end processing unit is configured to receive the 3D point cloud data transmitted by the sector depth camera and the IMU data transmitted by the inertial sensor, and to perform a point cloud processing on the 3D point cloud data and the IMU data to obtain a second to-be-optimized pose for being transmitted to a back-end optimization unit. Specifically, the point cloud front-end processing unit is used to obtain the second to-be-optimized pose, based on the 3D point cloud data obtained by the sector depth camera and incorporating with an IMU data processing, for serving as a positioning reference pose provided by the sector depth camera.

The back-end optimization unit is configured to receive the first to-be-optimized pose transmitted by the image front-end processing unit, the second to-be-optimized pose transmitted by the point cloud front-end processing unit, and the IMU data transmitted by the inertial sensor, and to perform a back-end optimization processing on the second to-be-optimized pose based upon the IMU data and the first to-be-optimized pose, so as to obtain an optimized location information. Specifically, the back-end optimization unit is used to use the IMU data and the first to-be-optimized pose to perform the back-end optimization processing on the second to-be-optimized pose that is obtained by the sector depth camera, so as to realize, based on the image data collected by a visual positioning technology and the IMU data collected by the inertial sensor, a resolution to the problem that the sector depth camera cannot obtain enough matching information due to the limitation of the collection angle, and to improve the positioning accuracy of the positioning system.

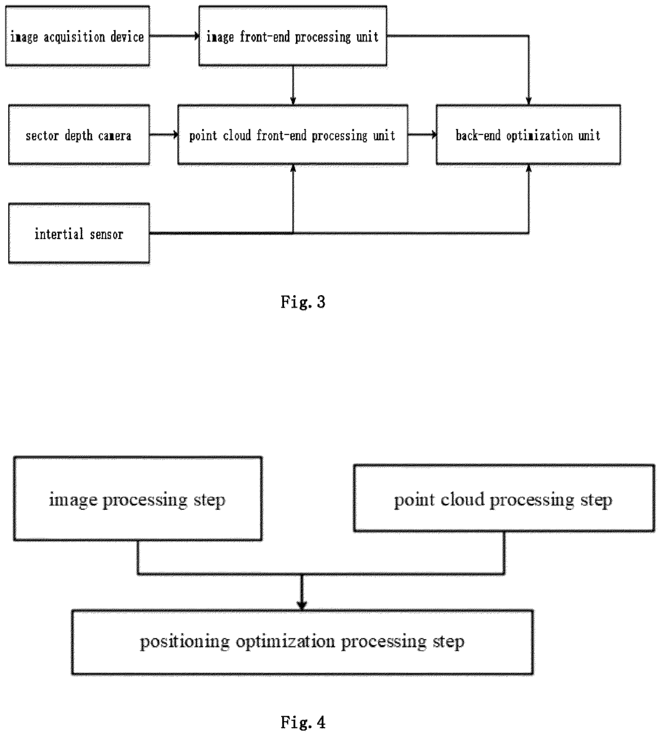

Based on the above embodiments, as a preferred embodiment of the present invention shown in FIG. 3, the image front-end processing unit in a third embodiment of the present invention also transmits the first to-be-optimized pose to the point cloud front-end processing unit, used as an initial pose to compensate and optimize the second to-be-optimized pose that is obtained by the point cloud front-end processing unit based on the 3D point cloud data and IMU data. In this embodiment, by means of using the first to-be-optimized pose obtained by the visual positioning technology as the initial pose of the second to-be-optimized pose obtained by the sector depth camera, a compensation and optimization for the second to-be-optimized pose based on the first to-be-optimized pose is realized, the accuracy of the second to-be-optimized pose acquired by the sector depth camera is thus improved.

According to the positioning system based on the sector depth camera described in the above embodiments, as a preferred embodiment of the present invention, a fourth embodiment of the present invention provides a positioning method based on the sector depth camera. The positioning method based upon the sector depth camera includes an image processing step, a point cloud processing step, and a positioning optimization processing step. It should be noted that, as shown in Figure 4, the image processing step and the point cloud processing step are performed synchronously, and the output result of image processing step and the output result of point cloud processing step both are optimized in the positioning optimization processing step.

Specifically, the image processing step includes: the image acquisition device acquires the current frame image and transmits it to the image front-end processing unit; the image front-end processing unit performs an image processing on the current frame image to obtain a relative pose of the current frame image as the first to-be-optimized pose; the image front-end processing unit transmits the first to-be-optimized pose to the back-end optimization unit. The point cloud processing step includes: the sector depth camera obtains the current frame 3D point cloud and transmits it to the point cloud front-end processing unit; the point cloud front-end processing unit performs an optimal matching screening on the current frame 3D point cloud to obtain an optimal matching pose of the current frame 3D point cloud as the second to-be-optimized pose; and the front-end processing unit transmits the second to-be-optimized pose to the back-end optimization unit. The positioning optimization processing step includes: the back-end optimization unit performs a positioning optimization processing on the second to-be-optimized pose transmitted by the point cloud front-end processing unit, based on the IMU data transmitted by the inertial sensor and the first to-be-optimized pose transmitted by the image front-end processing unit, to obtain an optimized location information. This embodiment uses the first to-be-optimized pose output by the image processing step to optimize the second to-be-optimized pose output by the point cloud processing step, so as to realize an improvement of the positioning accuracy based on the sector depth camera by means of the way of a visual compensation.

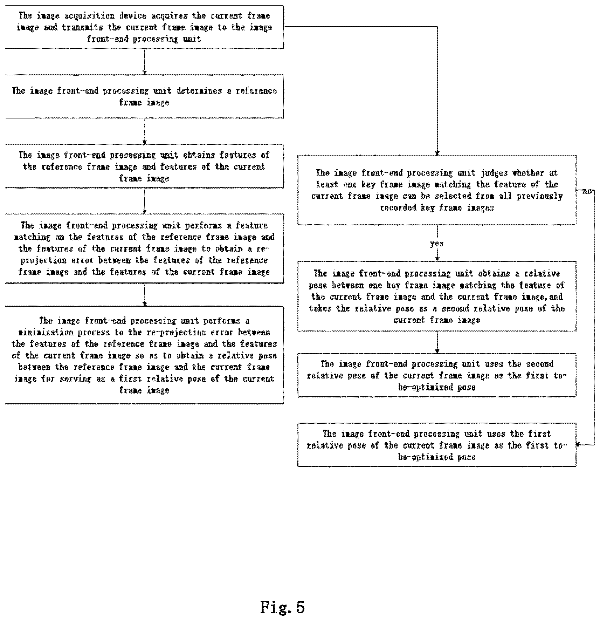

According to the positioning method based on the sector depth camera described in the above embodiment, as a preferred embodiment of the present invention and a fifth embodiment of the present invention shown in FIG. 5, the image processing step specifically includes: configuring the image acquisition device to acquire the current frame image and to transmit it to the image front-end processing unit. Specifically, the image acquisition device may be, but not limited to, a monocular camera, a binocular camera, a fisheye camera or a depth camera, etc., which have an image acquisition function. The image front-end processing unit determines a reference frame image from the previously recorded image. Specifically, the method of determining the reference frame image is to conduct an adjustment according to an actual optimization accuracy requirement. The method for the image front-end processing unit to determines a reference frame image from the previously recorded image specifically includes: the image front-end processing unit determines, from the previously recorded images, that a previous frame image of the current frame image is the reference frame image, and/or the image front-end processing unit determines, from the previously recorded images, that one key frame image is the reference frame image.

The image front-end processing unit performs a feature extraction on the reference frame image and the current frame image, and obtains features of the reference frame image and features of the current frame image. Specifically, the way for the image front-end processing unit to perform a feature extraction on the reference frame image and the current frame image can be, but not limited to, Harris algorithm, SIFT (Scale Invariant Feature Transform) algorithm, SURF algorithm, or FAST algorithm, etc.

The image front-end processing unit performs a feature matching on the features of the reference frame image and the features of the current frame image to obtain a re-projection error between the features of the reference frame image and the features of the current frame image. Specifically, the feature matching refers to a comparison on features in two images one by one. The re-projection error between the features of the reference frame image and the features of the current frame image refers to errors between the feature points of the reference frame image projected on the current frame image and the feature points in the current frame image under one-to-one correspondingly matching.

The image front-end processing unit performs a minimization process to the re-projection error between the features of the reference frame image and the features of the current frame image so as to obtain a relative pose between the reference frame image and the current frame image for serving as a first relative pose of the current frame image. Specifically, the minimization process refers to a processing means for optimizing the re-projection error between the features of the reference frame image and the features of the current frame image, so that the relative pose between the reference frame image and the current frame image is minimized. The minimization method may be, but not limited to, a method that can reduce the re-projection error, such as adjusting the pose of the image acquisition device.

The image front-end processing unit transmits the first relative pose of the current frame image, as the first to-be-optimized pose, to the back-end optimization unit.

The image processing step provided in this embodiment improves the accuracy of the first to-be-optimized pose by obtaining the re-projection error between the current frame image and the reference frame image, and minimizing the re-projection error, so as to ensure that the visual positioning technology can provide a high-precision first to-be-optimized pose which is used for compensation and optimization on the second to-be-optimized pose acquired by the sector depth camera.

According to the positioning method based on the sector depth camera described in the above embodiment, as a preferred embodiment of the present invention and a sixth embodiment of the present invention shown in Figure 5, the image processing step further includes: the front-end processing unit judges whether it is possible to select at least one key frame image matching the feature of the current frame image from all previously recorded key frame images ; if it is possible to select at least one key frame matching the feature of the current frame image from all the previously recorded key frame images, then it obtains a relative pose between one key frame image matching the feature of the current frame image and the current frame image, and takes the relative pose as a second relative pose of the current frame image; the image front-end processing unit transmits the second relative pose of the current frame image, as the first to-be-optimized pose, to the back-end optimization unit; If it is not possible to select at least one key frame image matching the feature of the current frame image from all the previously recorded key frame images, the image front-end processing unit uses the first relative pose of the current frame image as the first to-be-optimized pose to the back-end optimization unit. Specifically, the key frame image that matches the feature of the current frame image means that the feature in the key frame image coincide with the feature of the current frame image to meet a preset matching threshold. The preset matching threshold can be adjusted based on actual matching accuracy needs. In this embodiment, by selecting a matching key frame image from all key frame images and sending the relative pose between the key frame image and the current frame image as the first to-be-optimized pose to the pose optimization processing step, the accuracy of the first to-be-optimized pose is improved. Moreover, the relative pose between the key frame image and the current frame image is set as the first to-be-optimized pose, prior to the relative pose between the reference frame image and the current frame image, it can optimize the accuracy of the first to-be-optimized pose outputted by the image processing step and improve the overall reliability of the positioning method.

Preferably, during the execution of the image processing step, it also includes: if the at least one key frame image matching the feature of the current frame image can be selected from all the previously recorded key frame images, then the current frame images are tagged and stored as key frame images. This step records a new key frame image in real time through the feature matching result.

According to the positioning method based on the sector depth camera described in the above embodiment, as a preferred embodiment of the present invention and a seventh embodiment of the present invention, the point cloud processing step specifically includes: the sector depth camera acquires the current frame 3D point cloud and transmits it to the point cloud front-end processing unit; and the point cloud front-end processing unit matches the current frame 3D point cloud with the current sub-image, and obtains an optimal matching pose between the current frame 3D point cloud and the current sub-image. Specifically, the current sub-image is formed by registering and superimposing multiple frames of 3D point cloud data. The point cloud front-end processing unit uses the optimal matching pose between the current frame 3D point cloud and the current sub-image as the second to-be-optimized pose. In this embodiment, by matching the current frame 3D point cloud with the current sub-image, the optimal matching pose between the current frame 3D point cloud and the current sub-image is obtained, and then it is transmitted as the second to-be-optimized pose to execute the back-end optimization processing step. The point cloud processing step disclosed in this embodiment realizes an optimization of the pose obtained based on the 3D point cloud data so as to obtain the optimal matching pose, and realizes a front-end optimization step of the 3D point cloud data. That is, before a visual compensation and optimization to the sector depth camera, the front-end optimization is performed on the 3D point cloud acquired by the sector depth camera. Then, by means of optimizations respectively in the front-end and the back-end, an overall positioning accuracy and reliability of the positioning method is improved.

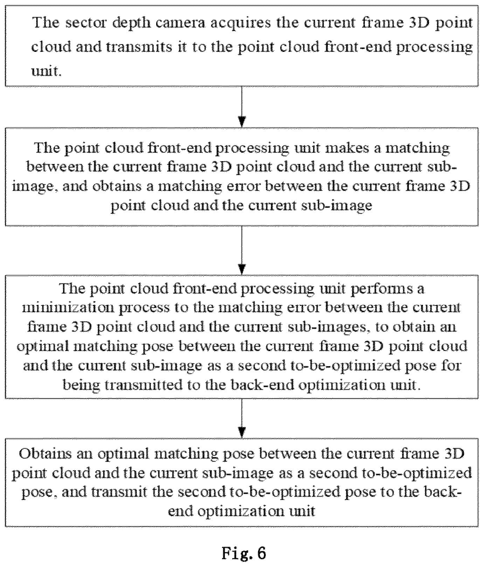

According to the positioning method based on the sector depth camera described in the above embodiment, as a preferred embodiment of the present invention and an eighth embodiment of the present invention shown in FIG. 6, the method for the point cloud front-end processing unit to use the current frame 3D point cloud to match with the current sub-image and to obtain the optimal matching pose between the current frame 3D point cloud and the current sub-image specifically includes: the point cloud front-end processing unit performs a 3D point cloud superposition matching based on the previously obtained 3D point cloud to generate the current sub-image; the point cloud front-end processing unit uses an iterative closest point algorithm to match the current frame 3D point cloud with all the 3D point clouds of the current sub-image respectively, so as to obtain a matching error between the current frame 3D point cloud and the current sub-image. It should be noted that the iterative closest point algorithm used in this embodiment is an algorithm used in the field of image registration to perform a registration between point sets and point sets.

The point cloud front-end processing unit performs a minimization process to the matching error between the current frame 3D point cloud and the current sub-image, so as to obtain an optimal matching pose between the current frame 3D point cloud and the current sub-image. Specifically, the minimization process refers to perform a minimization to the matching error after the iterative closest point algorithm having done a registration to the current frame 3D point cloud and the current sub-image, so as to make the current frame 3D point cloud and the current sub-image be matched and overlapped as much as possible and to reduce the matching error, thereby realizing an optimization to a front-end results of the 3D point cloud data, and optimizing the overall positioning effect.

According to the positioning method based on the sector depth camera described in the above-mentioned embodiment, as a preferred embodiment of the present invention and a ninth embodiment of the present invention, the point cloud processing step further includes: the point cloud front-end processing unit judges whether the minimized matching error between the 3D point cloud of the current frame and the current sub-image is greater than or equal to a preset error threshold. It should be noted that the preset error threshold is a threshold set by comprehensively considering a lot of factors including a preset angle range covered by the sector depth camera in a horizontal direction during an actual application process, and matching accuracy requirements. The preset error threshold is used to limit the size of the matching error, so as to determine whether to rebuild the sub-image, thereby ensuring the accuracy and reliability of the registration between the subsequent 3D point cloud data and the current sub-image.

If the minimized matching error between the current frame 3D point cloud and the current sub-image is greater than or equal to a preset error threshold, then the current sub-image is used as a historical sub-image, and a current sub-image is rebuilt. If the minimized matching error between the current frame 3D point cloud and the current sub-map is less than the preset error threshold, then the current frame 3D point cloud is superimposed and matched to the current sub-map to update the current sub-map. This embodiment uses a comparison between the minimized matching error with the preset error threshold in the point cloud processing step, to determine a variation status of the 3D point cloud data, and to improve the accuracy of the second to-be-optimized pose which output by the small-angle point cloud processing step, thereby ensuring an overall accuracy and reliability of the positioning method.

According to the positioning method based on the sector depth camera described in the above embodiment, as a preferred embodiment of the present invention and a tenth embodiment of the present invention, the point cloud processing step further includes: the point cloud front-end processing unit selects a first to-be-optimized pose of a nearest frame as an initial pose of the current frame 3D point cloud to compensate and optimize the current frame 3D point cloud; wherein, the first to-be-optimized pose of the nearest frame refers to a first to-be-optimized pose of a frame that spaces from the frame where the current frame 3D point cloud is located with least number of frames. In this embodiment, by using the to-be-optimized pose based on the image acquisition as the initial pose of the 3D point cloud, it can realize a front-end optimization of the second to-be-optimized pose based on the sector depth camera during the point cloud processing. By using the first to-be-optimized pose as the initial pose, the accuracy of the second to-be-optimized pose is improved.

According to the positioning method based on the sector depth camera described in the above embodiment, as a preferred embodiment of the present invention and an eleventh embodiment of the present invention, the point cloud processing step further includes: the point cloud front-end processing unit obtains the IMU data transmitted by the inertial sensor. Specifically, the inertial sensor refers to a sensor used to detect and measure an acceleration and rotational motion. The inertial sensor includes, but not limited to, an accelerometer and a gyroscope. The IMU data refers to data such as acceleration and angular velocity obtained by the inertial sensor which is based on an accelerometer and a gyroscope.

The point cloud front-end processing unit judges whether the initial pose of the current frame 3D point cloud is the same frame as the current frame 3D point cloud. It should be noted that the judgement on whether the initial pose of the current frame 3D point cloud is the same frame as the current frame 3D point cloud refers to a judgement on whether the acquisition moment of the initial pose of the current frame 3D point cloud is the same as the acquisition moment of the current frame 3D point cloud.

If the initial pose of the current frame 3D point cloud is the same frame as the current frame 3D point cloud, then the initial pose of the current frame 3D point cloud is used to register the current frame 3D point cloud. If the initial pose of the current frame 3D point cloud and the current frame 3D point cloud are not in the same frame, the point cloud front-end processing unit performs an equal-scale alignment processing on the initial pose of the current frame 3D point cloud and the current frame 3D point cloud based on the IMU data. The initial pose of the current frame 3D point cloud having done the equal-scale alignment process is used for a registration to the current frame 3D point cloud having done the equal-scale alignment process. It should be noted that the acquisition frequency of the IMU data is usually several times more than the acquisition frequency of the 3D point cloud data or the acquisition frequency of the image, and the acquisition frequency of the IMU data is much higher than the acquisition frequency of the 3D point cloud or the image. For example, the acquisition frequency of the IMU data is 1000 frames per second, the acquisition frequency of the 3D point cloud data is 30 frames per second, and the acquisition frequency of the image is 10 frames per second. These examples here only use to illustrate that there is a large frequency difference in the acquisition frequencies of the IMU data, the 3D point cloud, and the images. It does not mean that the IMU data, the 3D point cloud data and the images in the present invention are executed according to the above acquisition frequencies. In the present invention, the acquisition frequencies of the IMU data, the 3D point cloud data and the images are adjusted according to different acquisition devices used in the actual application process and requirements of actual accuracy.

The purpose of this judgment is to determine whether the initial pose of the 3D point cloud is the same frame as the current frame 3D point cloud. If it is the same frame, the initial pose of the current frame 3D point cloud can be directly used for a registration to the current frame 3D point cloud. On the contrary, if it is a different frame, the IMU data needs to be aligned under an equal scale in the time axis first and then be done for the registration so as to ensure the accuracy and effectiveness of the registration.

According to the positioning method based on the sector depth camera described in the above embodiment, as a preferred embodiment of the present invention and a twelfth embodiment of the present invention, the method for the point cloud front-end processing unit to perform, based on the IMU data, an equal-scale alignment processing for the initial pose of the current frame 3D point cloud and the current frame 3D point cloud specifically includes: the point cloud front-end processing unit acquires two frames of the IMU data closest to the initial pose of the current frame 3D point cloud, and a former frame in the two frames of the IMU data closest to the initial pose of the current frame 3D point cloud is used as a first alignment reference data, and a latter frame in the two frames of the IMU data closest to the initial pose of the current frame 3D point cloud is used as a second alignment reference data. It should be noted that the acquisition moment of the former frame of the two frames of the IMU data closest to the initial pose of the current frame 3D point cloud is before the acquisition moment of the initial pose of the current frame 3D point cloud, the acquisition moment of the latter frame of the two frames of IMU data closest to the initial pose of the current frame 3D point cloud is after the acquisition moment of the initial pose of the current frame 3D point cloud.

The point cloud front-end processing unit calculates a first moment difference between the acquisition moment of the initial pose of the current frame 3D point cloud and the acquisition moment of the first alignment reference data. The point cloud front-end processing unit calculates a second moment difference between the acquisition moment of the initial pose of the current frame 3D point cloud and the acquisition moment of the second alignment reference data. Specifically, the moment difference between the acquisition moments of the two data is determined according to the different acquisition moments of the two data value.

The point cloud front-end processing unit determines a pose between the initial pose of the current frame 3D point cloud and the first alignment reference data according to a pose between the first alignment reference data and the second alignment reference data, the first moment difference, and the second moment difference. Specifically, The method of determining the pose between the initial pose of the current frame 3D point cloud and the first alignment reference data, according to the pose between the first alignment reference data and the second alignment reference data, the first moment difference, and the second moment difference, specifically includes: averaging the pose between the first alignment reference data and the second alignment reference data to each moment, due to a situation that the pose between the first alignment reference data and the second alignment reference data is a known data, to realize an averaging based upon an equal-time ratio, so as to determine that the pose between the initial pose of the current frame 3D point cloud and the first alignment reference data is equal to a result of dividing a product of the pose between the first alignment reference data and the second alignment reference data and the first moment difference by a sum of the first moment difference and the second moment difference.

The point cloud front-end processing unit acquires two frames of the IMU data closest to the current frame 3D point cloud, and uses a former frame in the two frames of the IMU data closest to the current frame 3D point cloud as a third alignment reference data, a latter frame in the two frames of the IMU data closest to the current frame 3D point cloud as a fourth alignment reference data. It should be noted that the acquisition moment of the former frame in the two frames of the IMU data closest to the current frame 3D point cloud is before the acquisition moment of the current frame 3D point cloud, and the acquisition moment of the latter frame in the two frames of the IMU data closest to the current frame 3D point cloud is after the acquisition moment of the current frame 3D point cloud.

The point cloud front-end processing unit calculates a third moment difference between the acquisition moment of the current frame 3D point cloud and the acquisition moment of the third alignment reference data. The point cloud front-end processing unit calculates a fourth moment difference between the acquisition moment of the current frame 3D point cloud and the acquisition moment of the fourth alignment reference data. The point cloud front-end processing unit determines a pose between the current frame 3D point cloud and the third alignment reference data according to the pose between the third alignment reference data and the fourth alignment reference data, the third moment differences, and the fourth moment difference. Specifically, the method in this step of determining the pose between the current frame 3D point cloud and the third alignment reference data is the same as the above-mentioned method of determining the pose between the initial pose of the current frame 3D point cloud and the first alignment reference data.

The point cloud front-end processing unit calculates a fifth moment difference between the acquisition moment of the first alignment reference data and the acquisition moment of the third alignment reference data. The point cloud front-end processing unit determines a pose between the initial pose of the current frame 3D point cloud and the current frame 3D point cloud, according to the pose between the first alignment reference data and the third alignment reference data, the fifth moment difference, the pose between the initial pose of the current frame 3D point cloud and the first alignment reference data, and the pose between the current frame 3D point cloud and the third alignment reference data.. It should be noted that the acquisition moment of the initial pose of the current frame 3D point cloud is before the acquisition moment of the current frame 3D point cloud. In this embodiment, an equal-scale alignment processing on the initial pose of the current frame 3D point cloud and the current frame 3D point cloud is performed based upon the IMU data, so as to realize a registration to the current frame 3D point cloud based upon the initial pose of the current frame 3D point cloud, thereby improving the accuracy of the current frame 3D point cloud.

According to the positioning method based on the sector depth camera described in the above embodiment, as a preferred embodiment of the present invention and a thirteenth embodiment of the present invention, the positioning optimization processing step specifically includes: the back-end optimization unit receives the first to-be-optimized pose transmitted by the image front-end processing unit and the second to-be-optimized pose transmitted by the point cloud front-end processing unit; the back-end optimization unit performs an error minimization calculation on the first to-be-optimized pose and the second to-be-optimized pose to obtain a best node graph; the back-end optimization unit receives the IMU data transmitted by the inertial sensor, and performs a filter fusion optimization based on the IMU data by incorporating with the best node graph to obtain the optimized location information. The filtering fusion optimization may be, but not limited to, a Kalman filtering and other filtering that has the function of optimizing error. Specifically, the Kalman filtering is a filtering that eliminates data errors by optimizing predicted values and observed values. Specifically, the Kalman filtering consists of two processes: prediction and correction. In the prediction stage, the Kalman filtering uses an estimation based on the data of the previous frame to make predictions for the current state. In the correction stage, the Kalman filtering uses an observed values of the current frame to correct the predicted values of the current frame state obtained in the preset stage, thereby obtaining an estimate closer to real data. In the present invention, the pose data obtained from the vision and the sector depth cameras are used as prediction values, and the pose data obtained from the IMU data are used as correction values, so as to obtain the optimized positioning information. In this embodiment, by means of multiple error minimization processes, the pose information is optimized step by step, thereby improving the overall positioning accuracy. Moreover, the reason of using the Kalman filter for the filter fusion processing in this embodiment is because the calculation requirements of the Kalman filter are small and the prediction based upon its estimated structure is relatively accurate, thereby ensuring the accuracy and reliability of the positioning results.

Apparently, the above-mentioned embodiments are only a part of the embodiments of the present invention, rather than all the embodiments, and the technical solutions of the various embodiments can be combined with each other. In the above-mentioned embodiments of the present invention, the descriptions of each embodiment have their own emphases, and for parts not described in detail in a certain embodiment, reference may be made to relevant descriptions of other embodiments. In the several embodiments provided by the present invention, it should be understood that the disclosed technical content can be implemented in other ways. In addition, it should be noted that the various specific technical features described in the above specific implementation manners may be combined in any suitable manner if there is no contradiction. In order to avoid unnecessary repetition, various possible combinations are not further described in the embodiments of the present invention.

Finally, it should be noted that the above embodiments are only used to illustrate the technical solutions of the present invention, rather than limiting them. Although the present invention has been described in detail with reference to the foregoing embodiments, those of ordinary skill in the art should understand that it is still possible to modify the technical solutions described in the foregoing embodiments, or perform equivalent replacements for some or all of the technical features, and these modifications or replacements do not make the essence of the corresponding technical solutions deviate from the technical solutions of the various embodiments of the present invention.

## Claims

1. A positioning system based on a sector depth camera, **characterized in that** the positioning system based on a sector depth camera specifically includes:
a sector depth camera used to collect 3D point cloud data within a sector range of a preset angle in a horizontal direction and transmitting the 3D point cloud data to a positioning optimization module;
an image acquisition device used to acquire image data and transmit the image data to the positioning optimization module;
an inertial sensor used to acquire IMU data and transmit the IMU data to the positioning optimization module; and
the positioning optimization module used to receive the 3D point cloud data transmitted by the sector depth camera, the image data transmitted by the image acquisition device, and the IMU data transmitted by the inertial sensor, and to optimize the 3D point cloud data based on the image data and the IMU data so as to obtain an optimized location information.

2. The positioning system based on the sector depth camera according to claim 1, **characterized in that** the positioning optimization module specifically includes:
an image front-end processing unit used to receive the image data transmitted by the image acquisition device, and perform a visual processing on the image data to obtain a first to-be-optimized pose for being transmitted to a back-end optimization unit;
a point cloud front-end processing unit used to receive the 3D point cloud data transmitted by the sector depth camera and the IMU data transmitted by the inertial sensor, and perform a point cloud processing on the 3D point cloud data and the IMU data to obtain a second to-be-optimized pose for being transmitted to a back-end optimization unit; and
the back-end optimization unit used to receive the first to-be-optimized pose transmitted by the image front-end processing unit, the second to-be-optimized pose transmitted by the point cloud front-end processing unit, and the IMU data transmitted by the inertial sensor, and using the IMU data and the first to-be-optimized pose to perform a back-end optimization processing on the second to-be-optimized pose to obtain the optimized location information.

3. The positioning system based on the sector depth camera according to claim 2, **characterized in that** the image front-end processing unit also transmits the first to-be-optimized pose to the point cloud front-end processing unit for serving a compensation data to optimize the second to-be-optimized pose which obtained by the point cloud front-end processing unit based on the 3D point cloud data and the IMU data.

4. A positioning method based on a sector depth camera, the positioning method based on the sector depth camera being realized based on the positioning system based on the sector depth camera according to any one of claims 1 to 3, **characterized in that** the positioning method based on the sector depth camera includes:
an image processing step in which the image acquisition device acquires a current frame of image and transmits the current frame image to the image front-end processing unit; the image front-end processing unit performs an image processing on the current frame image to obtain a relative pose of the current frame image as the first to-be-optimized pose; and the image front-end processing unit transmits the first to-be-optimized pose to the back-end optimization unit;
a point cloud processing step in which the sector depth camera obtains a current frame 3D point cloud and transmits the current frame 3D point cloud to the point cloud front-end processing unit; the point cloud front-end processing unit performs an optimal matching screening on the current frame 3D point cloud to obtain an optimal matching pose of the current frame 3D point cloud as the second to-be-optimized pose; and the point cloud front-end processing unit transmits the second to-be-optimized pose to the back-end optimization unit; and
a positioning optimization processing step in which the back-end optimization unit performs a positioning optimization processing on the second to-be-optimized pose transmitted by the point cloud front-end processing unit, based on the IMU data transmitted by the inertial sensor and the first to-be-optimized pose transmitted by the image front-end processing unit, to obtain an optimized location information.

5. The positioning method based on the sector depth camera according to claim 4, **characterized in that** the image processing step specifically includes :
configuring the image acquisition device to acquire the current frame image and transmits the current frame image to the image front-end processing unit;
configuring the image front-end processing unit to determine a reference frame image from a previously recorded image;
configuring the image front-end processing unit to perform a feature extraction on the reference frame image and the current frame image, and to obtain features of the reference frame image and features of the current frame image;
configuring the image front-end processing unit to perform a feature matching on the features of the reference frame image and the features of the current frame image, and to obtain a re-projection error between the features of the reference frame image and the features of the current frame image;
configuring the image front-end processing unit to conduct a minimization process to the re-projection error between the features of the reference frame image and the features of the current frame image so as to obtain a relative pose between the reference frame image and the current frame image for serving as a first relative pose of the current frame image;
configuring the image front-end processing unit to transmit the first relative pose of the current frame image as the first to-be-optimized pose to the back-end optimization unit.

6. The positioning method based on the sector depth camera according to claim 5, **characterized in that** the method for the image front-end processing unit to determine the reference frame image from the previously recorded image specifically includes:
configuring the image front-end processing unit to determine a previous frame image of the current frame image from the previously recorded image as the reference frame image, and/or configuring the image front-end processing unit to determine one key frame image from previously recorded images as the reference frame image.

7. The positioning method based on the sector depth camera according to claim 6, **characterized in that** the image processing step also include:
configuring the image front-end processing unit to judge whether at least one key frame image matching the features of the current frame image can be selected from all previously recorded key frame images; and
if it is possible to select the at least one key frame image matching the feature of the current frame image from all the previously recorded key frame images , then to obtain the relative pose between the one key frame image matching the feature of the current frame image and the current frame image as a second relative pose of the current frame image, and configuring the image front-end processing unit to transmit the second relative pose of the current frame image as the first to-be-optimized pose to the back-end optimization unit;
if it is not possible to select the at least one key frame image matching the features of the current frame image from the all previously recorded key frame images, then configuring the image front-end processing unit to transmit the first relative pose of the current frame image as the first to-be-optimized pose to the back-end optimization unit.

8. The positioning method based on the sector depth camera according to claim 4, **characterized in that** the point cloud processing step specifically includes:
configuring the sector depth camera to acquire the current frame 3D point cloud and to transmit the current frame 3D point cloud to the point cloud front-end processing unit;
configuring the point cloud front-end processing unit to match the current frame 3D point cloud with a current sub-image so as to obtain the optimal matching pose between the current frame 3D point cloud and the current sub-image; and
configuring the point cloud front-end processing unit to use the optimal matching pose between the current frame 3D point cloud and the current sub-image as the second to-be-optimized pose.

9. The positioning method based on the sector depth camera according to claim 8, **characterized in that** the method for the point cloud front-end processing unit to match the current frame 3D point cloud with the current sub-image so as to obtain the optimal matching pose between the current frame 3D point cloud and the current sub-image, specifically including:
configuring the point cloud front-end processing unit to perform a 3D point cloud superimposition matching based on the previously acquired 3D point cloud to generate the current sub-image;
configuring the point cloud front-end processing unit to use an iterative closest point algorithm to match the current frame 3D point cloud with all the 3D point clouds of the current sub-image respectively so as to obtain a matching error between the current frame 3D point cloud and the current sub-image;
configuring the point cloud front-end processing unit to minimize the matching error between the current frame 3D point cloud and the current sub-image, and to obtain the optimal matching pose between the current frame 3D point cloud and the current sub-image.

10. The positioning method based on the sector depth camera according to claim 9, **characterized in that** the point cloud processing step also includes:
configuring the point cloud front-end processing unit to judge whether the minimized matching error between the current frame 3D point cloud and the current sub-image is greater than or equal to a preset error threshold; and
if the minimized matching error between the current frame 3D point cloud and the current sub-image is greater than or equal to the preset error threshold, then using the current sub-image as a historical sub-image, and rebuilding the current sub-image;
if the minimized matching error between the current frame 3D point cloud and the current sub-image is smaller than the preset error threshold, then configuring the current frame 3D point cloud to be superimposed and matched to the current sub-image to update the current sub-image.

11. The positioning method based on the sector depth camera according to claim 8, **characterized in that** the point cloud processing step also includes: configuring the point cloud front-end processing unit to select the first to-be-optimized pose in the nearest adjacent frame as an initial pose of the current frame 3D point cloud to compensate and optimize the current frame 3D point cloud; wherein, the first to-be-optimized pose in the nearest adjacent frame refers to a frame of the first to-be-optimized pose with a least number of frames away from the frame where the current frame 3D point cloud located.

12. The positioning method based on the sector depth camera according to claim 11, **characterized in that** the point cloud processing step also includes:
configuring the point cloud front-end processing unit to acquire the IMU data transmitted by the inertial sensor;
configuring the point cloud front-end processing unit to judge whether the initial pose of the current frame 3D point cloud is the same frame as the current frame 3D point cloud; and
if the initial pose of the current frame 3D point cloud is the same frame as the current frame 3D point cloud, then using the initial pose of the current frame 3D point cloud for a registration to the current frame 3D point cloud;
if the initial pose of the current frame 3D point cloud is not the same frame as the current frame 3D point cloud, then configuring the point cloud front-end processing unit to perform an equal-scale alignment processing on the initial pose of the current frame 3D point cloud and the current frame 3D point cloud based on the IMU data, and using the initial pose of the current frame 3D point cloud having done the equal-scale alignment process for a registration to the current frame 3D point cloud having done the equal-scale alignment process.

13. The positioning method based on the sector depth camera according to claim 12, **characterized in that** the method for the point cloud front-end processing unit to perform an equal-scale alignment processing on the initial pose of the current frame 3D point cloud and the current frame 3D point cloud based on the IMU data specifically includes:
configuring the point cloud front-end processing unit to obtain two frames of IMU data closest to the initial pose of the current frame 3D point cloud, and using a former frame IMU data in the two frames of IMU data closest to the initial pose of the current frame 3D point cloud as a first alignment reference data, and using a latter frame IMU data in the two frames of IMU data of the initial pose of the current frame 3D point cloud as a second alignment reference data;
configuring the point cloud front-end processing unit to calculate a first moment difference between an acquisition moment of the initial pose of the current frame 3D point cloud and an acquisition moment of the first alignment reference data;
configuring the point cloud front-end processing unit to calculate a second moment difference between the acquisition moment of the initial pose of the current frame 3D point cloud and an acquisition moment of the second alignment reference data;
configuring the point cloud front-end processing unit to determine a pose between the initial pose of the current frame 3D point cloud and the first alignment reference data according to a pose between the first alignment reference data and the second alignment reference data, the first moment difference, and the second moment difference;
configuring the point cloud front-end processing unit to acquire two frames of IMU data closest to the current frame 3D point cloud, using a former frame IMU data in the two frames of IMU data closest to the current frame 3D point cloud as a third alignment reference Data, and using a latter frame IMU data in the two frames of the IMU data closest to the current frame 3D point cloud as a fourth alignment reference data;
configuring the point cloud front-end processing unit to calculates a third moment difference between the acquisition moment of the current frame 3D point cloud and an acquisition moment of the third alignment reference data;
configuring the point cloud front-end processing unit to calculate a fourth moment difference between the acquisition moment of the current frame 3D point cloud and an acquisition moment of the fourth alignment reference data;
configuring the point cloud front-end processing unit to determine a pose between the current frame 3D point cloud and the third alignment reference data according to the pose between the third alignment reference data and the fourth alignment reference data, the third moment difference, and the fourth moment difference;
configuring the point cloud front-end processing unit to calculate a fifth moment difference between the acquisition moment of the first alignment reference data and the acquisition moment of the third alignment reference data; and
configuring the point cloud front-end processing unit to determine a pose between the initial pose of the current frame 3D point cloud and the current frame 3D point cloud according to a pose between the first alignment reference data and the third alignment reference data, the fifth moment difference, the pose between the initial pose of the current frame 3D point cloud and the first alignment reference data, and the pose between the current frame 3D point cloud and the third alignment reference data.

14. The positioning method based on the sector depth camera according to any one of claims 4 to 13, **characterized in that** the positioning optimization processing step specifically includes:
configuring the back-end optimization unit to receive the first to-be-optimized pose transmitted by the image front-end processing unit and the second to-be-optimized pose transmitted by the point cloud front-end processing unit;
configuring the back-end optimization unit to perform an error minimization calculation on the first to-be-optimized pose and the second to-be-optimized pose to obtain a best node graph; and
configuring the back-end optimization unit to receive the IMU data transmitted by the inertial sensor, and to perform a filter fusion optimization based on the IMU data combined with the best node graph to obtain the optimized location information.
